# EUROPEAN PATENT APPLICATION

(11) **EP 4 709 054 A2**
(43) Date of publication of application: **11.03.2026**
(21) Application number: 26152309.6
(22) Date of filing: 09.12.2022
(51) Int. Cl.: H05B 45/46

(54) **BIDIRECTIONAL LIGHT-EMITTING POWER LINE PULSE SIGNAL TRIGGER LIGHT SOURCE, LAMP STRING AND CONTROL DEVICE**

(30) Priority: 29.12.2021 CN 202111640375; 07.05.2022 CN 202210494419
(62) Divisional of application: 22914144.5
(71) Applicant: Hangzhou Yun Led Chip Photoelectricity Tech.Co., Ltd., Hangzhou, Zhejiang 311100 (CN)
(72) Inventor: YANG, Yinghan, Hangzhou, Zhejiang, 311100 (CN)
(74) Representative: Grünecker Patent- und Rechtsanwälte PartG mbB

(57) **Abstract**

The present invention discloses a bidirectionally illuminating light source triggered by power-line pulse signals, comprising a first light emitting module triggered by power-line pulse signals and a reverse light emitting module, which are connected in parallel between a first port and a second port of the power lines. The first light emitting module triggered by power-line pulse signals comprises an LED color light group and an LED driver. When the voltage level of said first port of said power lines is higher than that of said second port, said LED driver drives said LED color light group according to said power-line pulse signals loaded on said power lines; when the voltage level of said first port of said power lines is lower than that of said second port, said reverse light emitting module operates. The present invention also discloses a bidirectional emitting light string triggered by power-line pulses, and a bidirectional emitting control apparatus triggered by power-line pulses. A spectral range is obtained by forward current while the light source is triggered to performs operations by the pulse signals input from the power lines, and another spectral range is obtained by reverse current, greatly increasing the spectral range of the light source with only two power wires.

## Description

### TECHNICAL FIELD

The present invention relates to the field of LED color lights, and more specifically, to a bidirectionally illuminating light source triggered by power-line pulse signals, a bidirectionally illuminating light string, and a bidirectionally illuminating control apparatus.

### BACKGROUND

Currently, there are "Arithmetic Operation Apparatus and LED Driver Triggered by Power-Line Edge Signal" and "Color Light apparatus Based on Power-Line Edge Signal Control" (Chinese invention patents ZL201410632645.7 and ZL201410775449.5) appearing on the market. Due to their high cost-effectiveness, these patented technologies have achieved large-scale industrial applications.

By transmitting control signals through the power lines, a controllable colorful LED light apparatus can be achieved without the need for an additional control signal wire, with only a power wire and a ground wire required. LEDs and a power-line carrier control chip are packaged together to form a controllable colorful LED module with the same appearance as a normal LED, greatly simplifying the production of the final product and improving its performance.

Currently, the controllable colorful LED modules and the colorful light apparatus controlled by the power-line signals can only conduct current in one direction, from one fixed end to the other, and do not allow reverse current, which cannot drive LEDs of other color ranges through reverse current to achieve more wide spectral effect. Especially in the case of RGB, allowing for reverse current to increase warm white color is not possible.

### SUMMARY

The purpose of the present invention is to provide a bidirectionally illuminating light source triggered by power-line pulse signals, which can further expand the spectral range of the light source by allowing forward and reverse currents with only a power wire and a ground wire. The present invention also provides a bidirectionally illuminating light string triggered by power-line pulse signals and a bidirectionally illuminating control apparatus triggered by power-line pulse signals, both of which comprise the aforementioned light sources.

A bidirectionally illuminating light source triggered by power-line pulse signals, comprises:
a first light emitting module triggered by power-line pulse signals and a reverse light emitting module, which are connected in parallel between a first port and a second port of the power lines;
said first light emitting module triggered by power-line pulse signals comprises an LED color light group and an LED driver that drives said LED color light group according to said power-line pulse signals loaded on said power lines;
when the voltage level of said first port of said power lines is higher than that of said second port, said LED driver drives said LED color light group according to said power-line pulse signals loaded on said power lines; when the voltage level of said first port of said power lines is lower than that of said second port, said reverse light emitting module operates.

Said first light emitting module triggered by power-line pulse signals and said reverse light emitting module can be packaged together, soldered together with other carriers, or connected together with wires of various lengths.

It should be understood that said reverse light emitting module can operate in a constant mode or a controlled dynamic mode.

Said LED driver comprises a reverse current blocking module and an operation module triggered by power-line pulse signals.

When the voltage level of said first port of said power lines is higher than that of said second port, said first light emitting module triggered by power-line pulse signals drives said LED color light group according to said power-line pulse signals loaded on said first port, or said second port, or the combination of said first port and said second port.

Said power-line pulse signals can be high pulse effective, low pulse effective, or a combination of high and low pulses. As a preferred embodiment, the low level of said power-line pulse signals is equal to the voltage level of said second port of said power lines; as another embodiment, the low level of said power-line pulse signals is a third voltage level that is higher than the voltage level of said second port and lower than the voltage level of the said first port.

The input of said reverse current blocking module is connected to said first port of said power lines, and the output of said reverse current blocking module is connected to said operation module triggered by power-line pulse signals. The ground of said operation module triggered by power-line pulse signals is connected to said second port of said power lines, and said operation module triggered by power-line pulse signals drives said LED color light group according to the operation result.

As a preferred embodiment, a pull-down resistor is connected between the output of said reverse current blocking module and the ground of said operation module triggered by power-line pulse signals.

As a preferred embodiment, said LED color light group can be connected in a common anode configuration, with the cathodes of the LEDs in said color light group connected to the output of said operation module triggered by power-line pulse signals. The common anode of said LED color light group can be connected to the output of said reverse current blocking module, or it can be connected to the input of said reverse current blocking module. As another embodiment, said LED color light group can be connected in a common cathode configuration, with the anodes of the LEDs in said color light group connected to the output of said operation module triggered by power-line pulse signals, and the common cathode of said LED color light group connected to said second port of the power lines.

As a preferred embodiment, said operation module triggered by power-line pulse signals performs computation triggered by said pulse signals, and drives said color light group according to the computation results. The computation can be understood as a change in the intemal state of said operation module triggered by power-line pulse signals, or can involve arithmetic operations, logical operations, or a combination of both. As a preferred embodiment, said operation module triggered by power-line pulse signals performs pulse counting computation triggered by said pulse signals. As another embodiment, said operation module triggered by power-line pulse signals performs encoding and decoding computation triggered by said pulse signals, with the pulse width of high or low levels corresponding to encoded information. Different lengths of high levels, or different lengths of low levels, or combinations of different lengths of high and low levels, represent different logical encoding information. As a preferred embodiment, a high pulse with a length less than 100us correspond to logic 0, while a high pulse with a length greater than or equal to 100us correspond to logic 1. As another embodiment, said operation module triggered by power-line pulse signals performs modulation and demodulation computation based on the current or voltage frequency triggered by said pulse signals, and drives said LED color light group according to the modulation and demodulation computation result. Furthermore, it should be understood that said pulse signals triggering computation can be triggered by a single pulse signal or a combination of multiple pulse signals.

As a preferred embodiment, said reverse current blocking module can be a single device or a combination of multiple devices. Said reverse current blocking module can be a resistor that limits the reverse current to less than 500mA.

As a preferred embodiment, said reverse current blocking module is a unidirectional conducting module. Said reverse current blocking module is conducting when the input voltage of said reverse current blocking module is higher than the output voltage of said reverse current blocking module, and said reverse current blocking module is tum off when the input voltage is lower than the output voltage of said reverse current blocking module.

As a preferred embodiment, said unidirectional conducting module is a diode, with the anode of said diode connected to said first port of said power lines and the cathode connected to said operation module triggered by power-line pulse signals. Alternatively, the unidirectional conducting module can be an equivalent diode formed by an NPN transistor, with the collector and base of the NPN transistor connected to said first port of said power lines, and the emitter connected to said operation module triggered by power-line pulse signals. Alternatively, the unidirectional conducting module can be an equivalent diode formed by a PNP transistor, with the collector and base of the PNP transistor connected to said operation module triggered by power-line pulse signals, and the emitter connected to said first port of said power lines.

As a preferred embodiment, said reverse current blocking module and said operation module triggered by power-line pulse signals are integrated in a same integrated circuit. Altematively, said reverse current blocking module and said operation module triggered by power-line pulse signals can be completed by different independent modules.

As a preferred embodiment, said reverse light-emitting module is composed of a plurality of LEDs. Furthermore, said plurality of LEDs can be one or more than two. Said plurality of LEDs can be in a parallel structure, or in a series-parallel structure. As a preferred embodiment, said reverse light-emitting module can be in a warm white color.

As another embodiment, said reverse light-emitting module is a second light-emitting module triggered by power-line pulse signals. When the voltage level of said first port of the power lines is lower than that of said second port of the power lines, said second light-emitting module triggered by power-line pulse signals is driven by said power-line pulse signals loaded on said power lines, and drives an LED color light group of said second light-emitting module triggered by power-line pulse signals. As a preferred embodiment, the structure of said second light-emitting module triggered by power-line pulse signals is the same as that of said first light-emitting module triggered by power-line pulse signals.

As a preferred embodiment, said LED color light group of said second light-emitting module triggered by power-line pulse signals is in a different color series from that of said LED color light group of said first light-emitting module triggered by power-line pulse signals. As a preferred embodiment, said LED color light group of said second light-emitting module triggered by power-line pulse signals is in a warm white, golden yellow, or cool white color series.

As a preferred embodiment, said operation module triggered by power-line pulse signals comprises:
a pulse-triggered operation unit, which performs operations triggered by said pulse signals from said power lines and outputs the operation results;
a charging unit, which provides a power supply voltage to said pulse-triggered operation unit according to said pulse signals from said power lines. It charges when said pulse signals is high and discharges when said pulse signals is low;
an initialization unit, which initializes the pulse-triggered operation unit according to said power supply voltage.

In this invention, those units of said operation module triggered by power-line pulse signals can be integrated into an operation chip.

Through initialization, said pulse-triggered operation unit can be set to any number, as required, usually set to "zero" (i.e., clear).

When said power-line pulse signals is high, said charging unit is charged. When the voltage level provided by said charging unit reaches a high level, both said pulse-triggered operation unit and said initialization unit are powered on successfully.

Said pulse-triggered operation unit can perform counting operations, arithmetic operations, logic operations, or shift operations, or any combination of these operations formed by counting, arithmetic, logic, and shift operations.

As a preferred embodiment, said pulse-triggered operation unit is a pulse counting unit, which counts the pulses of said pulse signals from said power lines and outputs the counting result.

Said pulse counting unit comprises a plurality of flip-flops, and the counting result is output from the output port of said flip-flops.

As a preferred embodiment, said flip-flops are D flip-flops.

As a preferred embodiment, said pulse counting unit comprises a plurality of D flip-flops connected in series to output the counting result from the output port of the D flip-flops. Specifically:
the clock signal input port of the first D flip-flop is connected to said power wire, and for each pair of adjacent D flip-flops, the clock signal input port of the next D flip-flop is connected to the inverse output port of the previous D flip-flop;
the reset ports of each D flip-flop are connected to the initialization unit, and the inverse output ports of each D flip-flop are connected to the trigger ports.

The present invention also provides a bidirectional emitting light string triggered by power-line pulses, which comprises a plurality of the aforementioned light sources connected to a first port of said light string and a second port of said light string. Said plurality of aforementioned light sources can be connected in parallel, in a series-parallel structure, or in a parallel-series structure. Said plurality of aforementioned light sources can be one or more than two.

The present invention further provides a bidirectional emitting control apparatus triggered by power-line pulses, which comprises an aforementioned bidirectional emitting light string triggered by power-line pulses, a first controllable switch, a second controllable switch, a third controllable switch, and a fourth controllable switch;
said first controllable switch, said second controllable switch, said third controllable switch, and said fourth controllable switch are controlled by a control circuit;
the input port of said first controllable switch is connected to a DC power supply, the output port of said first controllable switch is connected to said first port of said bidirectional emitting light string triggered by power-line pulses, and the control port of said first controllable switch is connected to said control circuit;
the output port of said second controllable switch is connected to said first port of the bidirectional emitting light string triggered by power-line pulses, the input port of said second controllable switch is connected to ground, and the control port of said second controllable switch is connected to said control circuit;
the input port of said third controllable switch is connected to said DC power supply, the output port of said third controllable switch is connected to said second port of said bidirectional emitting light string triggered by power-line pulses, and the control port of said third controllable switch is connected to said control circuit;
the output port of said fourth controllable switch is connected to said second port of said bidirectional emitting light string triggered by power-line pulses, the input port of said fourth controllable switch is connected to ground, and the control port of said fourth controllable switch is connected to said control circuit.

It should be understood that adding resistance to limit current between the ports of the controllable switch and their corresponding connection ports, and adding capacitance to the ports of the controllable switch is allowed.

As a preferred embodiment, when said second controllable switch and third controllable switch are turned off, said control circuit controls said first controllable switch between on and off to control said first light emitting modules triggered by power-line pulse signals of said bidirectional emitting light string triggered by power-line pulses.

As a preferred embodiment, when said second and third controllable switches are turned off and said first controllable switch is turned on, said control circuit controls said fourth controllable switch between on and off to control said first light emitting modules triggered by power-line pulse signals of said bidirectional emitting light string triggered by power-line pulses.
when said first controllable switch and the fourth controllable switch are turned off, and said second controllable switch and the third controllable switch are tumed on, said reverse light emitting modules work in said bidirectional emitting light string triggered by power-line pulses.

As a preferred embodiment, said first and third controllable switches in said bidirectional emitting control apparatus are PMOS devices, and said second and fourth controllable switches are NMOS devices.

As a preferred embodiment, said first and third controllable switches in said bidirectional emitting control apparatus are controllable switch modules, and said second and fourth controllable switches are NMOS devices.

Said controllable switch module comprises PMOS P1, NMOS N1, resistor R1, and resistor R2. The source of PMOS P1 serves as said input port of said controllable switch module, and the drain of PMOS P1 serves as said output port of said controllable switch module. The source of PMOS P1 is connected to one port of resistor R1, and the other port of resistor R1 is connected to the gate of PMOS P1 and one port of resistor R2. The other port of resistor R2 is connected to the drain of NMOS N1, and the gate of NMOS N1 serves as the control port of said controllable switch module. The source of NMOS N1 is connected to ground;

The drain of NMOS device serves as said output port of said second/fourth controllable switches, the source of NMOS device serves as said input port of said second/fourth controllable switches, and the gate of NMOS device serves as said control port of said second/fourth controllable switches.

As a preferred embodiment, the fourth controllable switch comprises a first N-type controllable switch, a second N-type controllable switch, and a current-limiting resistor:
said first N-type controllable switch comprises a control port, an input port, and an output port. Said control port of said first N-type controllable switch is electrically connected to said control circuit. Said input port of said first N-type controllable switch serves as said input port of said fourth controllable switch, and the output port of the said N-type controllable switch is connected to ground;
said second N-type controllable switch comprises a control port, an input port, and an output port. Said control port of said second N-type controllable switch is electrically connected to said control circuit, and said output port of said second N-type controllable switch is connected to ground.

One port of said current-limiting resistor is connected to said input port of said first N-type controllable switch, and the other port of said current-limiting resistor is connected to said input port of said second N-type controllable switch.

The present invention drives LED color light groups of a first light emitting module triggered by power-line pulse signals and a reverse light emitting module, and combines them to obtains a wide spectrum effect. Furthermore, the present invention drives LED color light groups of a first light emitting module triggered by power-line pulse signals and a second light-emitting module triggered by power-line pulse signals, and combines them to obtain a wider spectrum effect. The present invention also provides a bidirectional emitting light string triggered by power-line pulses and a bidirectional emitting control apparatus triggered by power-line pulses that include the aforementioned light sources. Compared with the prior art, the present invention uses bidirectional power supply, obtains one spectrum range through forward current operation triggered by power-line pulse signals, and adds another spectrum range through reverse current, greatly increasing the spectrum range of the light source, light string, and its control apparatus with only two power wires.

### BRIEF DESCRIPTION OF DRAWINGS

FIG. 1 illustrates a bidirectionally illuminating light source triggered by power-line pulse signals provided in Embodiment 1.
FIG. 2 illustrates an operation module triggered by power-line pulse signals in Embodiment 1.
FIG. 3 illustrates another type of bidirectional emitting power-line pulse-triggered light source.
Figure 4 shows a bidirectional emitting light string triggered by power-line pulses (fully parallel).
Figure 5 shows another type of bidirectional emitting light string triggered by power-line pulses (parallel-series).
Figure 6 shows another type of bidirectional emitting light string triggered by power-line pulses (series-parallel).
Figure 7 shows a bidirectional emitting power-line pulse-triggered control apparatus.
Figure 8 shows another type of bidirectional emitting power-line pulse-triggered control apparatus.

### DETAILED DESCRIPTION

In the following, with reference to the drawings of embodiments disclosed herein, the technical solutions of the embodiments of the disclosure will be described in a clear and fully understandable way.

### Embodiment 1

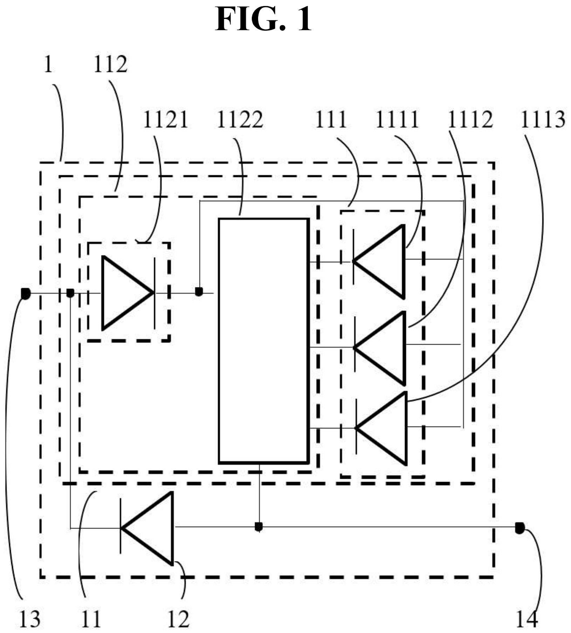

As shown in Figure 1, the present embodiment provides a bidirectionally illuminating light source triggered by power-line pulse signals (1), comprising:
a first light emitting module triggered by power-line pulse signals (11) and a reverse light emitting module (12), the first light emitting module triggered by power-line pulse signals (11) and the reverse light emitting module (12) being connected in parallel between the first port (13) and the second port (14) of the power lines of the light source;
the first light emitting module triggered by power-line pulse signals (11) comprises an LED color light group (111) and an LED driver (112) for driving the LED color light group (111) according to the power-line pulse signals loaded on the power lines;
when the voltage level of the first port (13) of the power lines is higher than that of the second port (14), the LED driver (112) drives the LED color light group (111) based on the power-line pulse signals loaded on the power lines; when the voltage level of the first port (13) of the power lines is lower than that of the second port (14), the reverse light emitting module (12) operates.

The LED driver (112) comprises: a reverse current blocking module (1121) and an operation module triggered by power-line pulse signals (1122);

The input of the reverse current blocking module (1121) is connected to the first port (13) of the power lines, and the output of the reverse current blocking module (1121) is connected to the operation module triggered by power-line pulse signals (1122). The operation module triggered by power-line pulse signals (1122) drives the LED color light group (111) according to the operation result.

In this embodiment, the LED color light group (111) is connected in common anode configuration and comprises a red LED (1111), a green LED (1112), and a blue LED (1113). The cathodes of the red LED (1111), the green LED (1112), and the blue LED (1113) are respectively connected to the output of the operation module triggered by power-line pulse signals (1122), and the anodes of the red LED (1111), the green LED (1112), and the blue LED (1113) are connected in common to the output of the reverse current blocking module.

In this embodiment, the reverse current blocking module (1121) is a diode, with the anode of the diode connected to the first port (13) of the power lines, and the cathode of the diode connected to the operation module triggered by power-line pulse signals (1122).

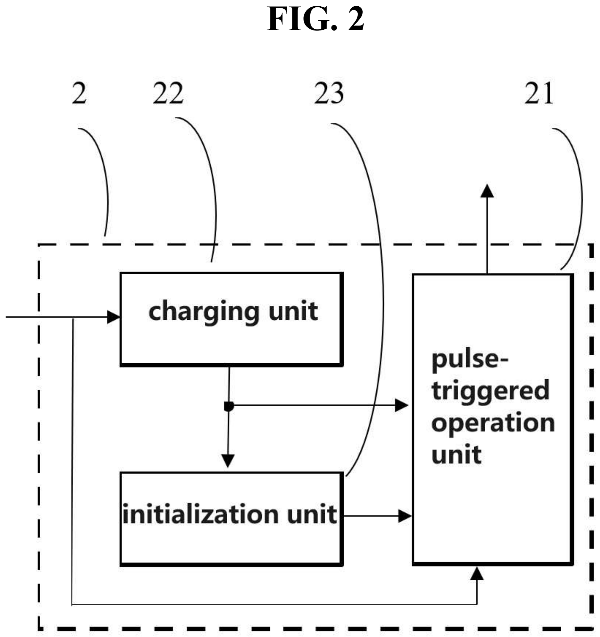

In this embodiment, as shown in Figure 2, the operation module triggered by power-line pulse signals (2, 1122) comprises: a pulse-triggered operation unit (21) for performing operations based on the pulse signals from the power lines and outputting the operation result; a charging unit (22) for providing power supply level to the pulse-triggered operation unit based on the pulse signals from the power lines, charging when the pulse signals is high, and discharging when the pulse signals is low; and an initialization unit (23) for initializing the pulse-triggered operation unit based on the power supply level.

The operation module triggered by power-line pulse signals (2, 1122) in this embodiment performs pulse counting operation triggered by the pulse signals and drives the color light group (111) based on the operation result.

In this embodiment, the reverse current blocking module (1121) and the operation module triggered by power-line pulse signals (1122) are integrated in a same integrated circuit.

In this embodiment, the reverse light emitting module (12) is a warm white LED, with the anode connected to the second port (14) of the power lines and the cathode connected to the first port (13) of the power lines.

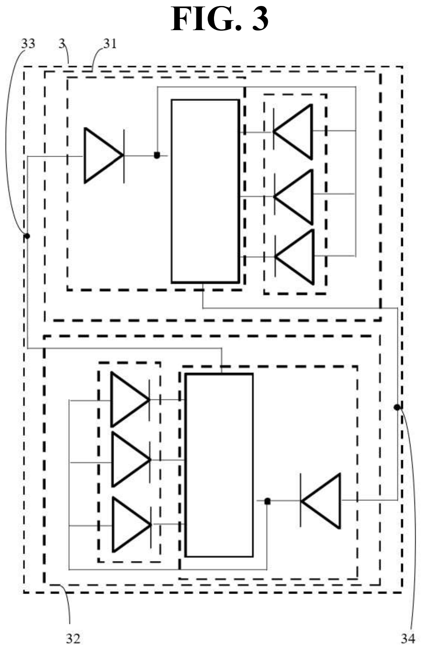

As shown in Figure 3, another embodiment of a bidirectionally illuminating light source triggered by power-line pulse signals (3) comprises a first light-emitting module triggered by power-line pulse signals (31) and a reverse light emitting module (32), which are connected in parallel between the first port (33) and the second port (34) of the power lines of the light source. In this embodiment, the reverse light emitting module (32) is a second light-emitting module triggered by power-line pulse signals. When the voltage level of the first port (33) of the power lines is lower than that of the second port (34), the second light-emitting module triggered by power-line pulse signals drives the LED color light group based on the power-line pulse signals loaded on the power lines.

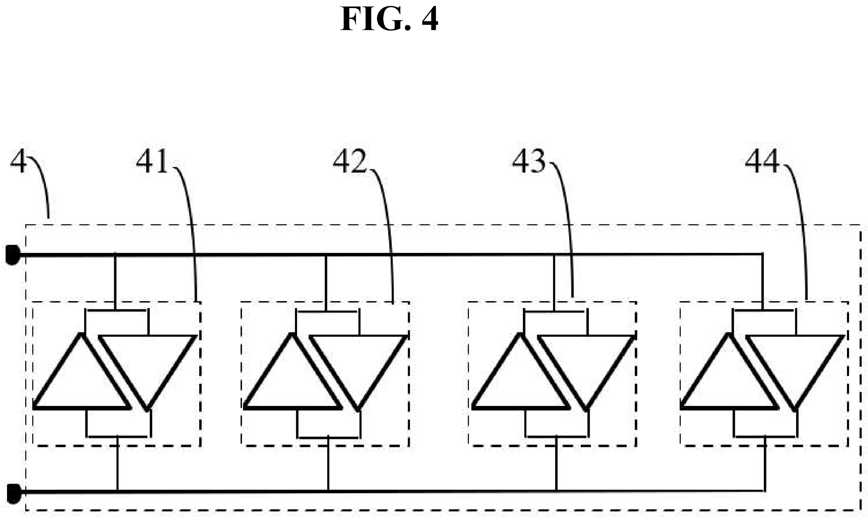

As shown in Figure 4, the present invention also provides a bidirectional emitting light string triggered by power-line pulses (4), which comprises four fully parallel bidirectional light sources: bidirectional light source (41), bidirectional light source (42), bidirectional light source 43, and bidirectional light source (44). The bidirectional light sources can be the bidirectionally illuminating light source triggered by power-line pulse signals (1) or the bidirectionally illuminating light source triggered by power-line pulse signals (3) as described above.

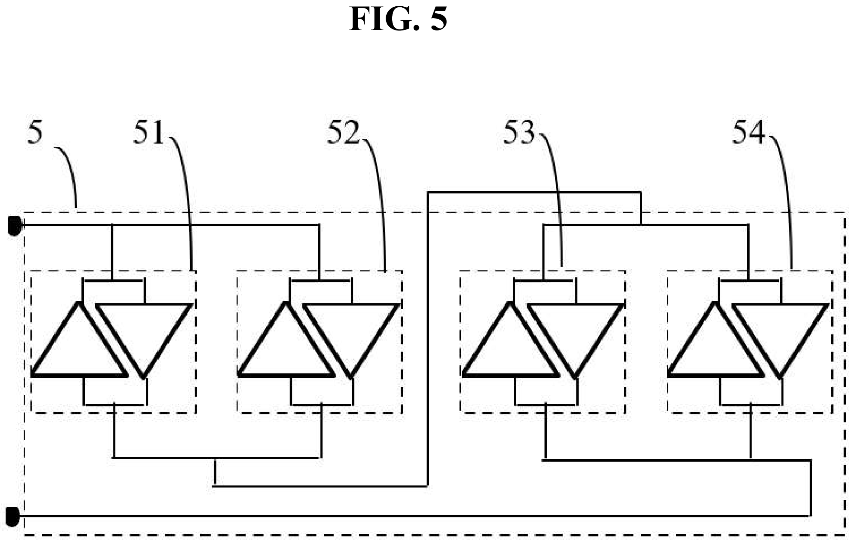

As shown in Figure 5, another embodiment of the present invention is a bidirectional emitting light string triggered by power-line pulses (5), which comprises four bidirectional light sources: bidirectional light source (51), bidirectional light source (52), bidirectional light source (53), and bidirectional light source (54). The parallel bidirectional light source (51) and bidirectional light source (52) are connected in series with the parallel bidirectional light source (53) and bidirectional light source (54). The bidirectional light sources can be the bidirectionally illuminating light source triggered by power-line pulse signals (1) or the bidirectionally illuminating light source triggered by power-line pulse signals (3) as described above.

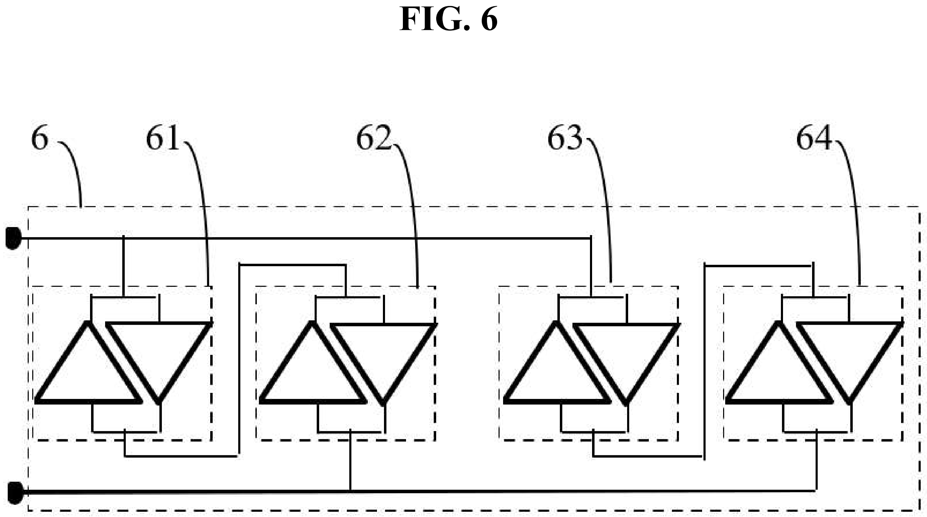

As shown in Figure 6, another embodiment of the present invention is a bidirectional emitting light string triggered by power-line pulses (6), which comprises four bidirectional light sources: bidirectional light source (61), bidirectional light source (62), bidirectional light source (63), and bidirectional light source (64). The serially connected bidirectional light source (61) and bidirectional light source (62) are connected in parallel with the serially connected bidirectional light source (63) and bidirectional light source (64). The bidirectional light sources can be the bidirectionally illuminating light source triggered by power-line pulse signals (1) or the bidirectionally illuminating light source triggered by power-line pulse signals (3) as described above.

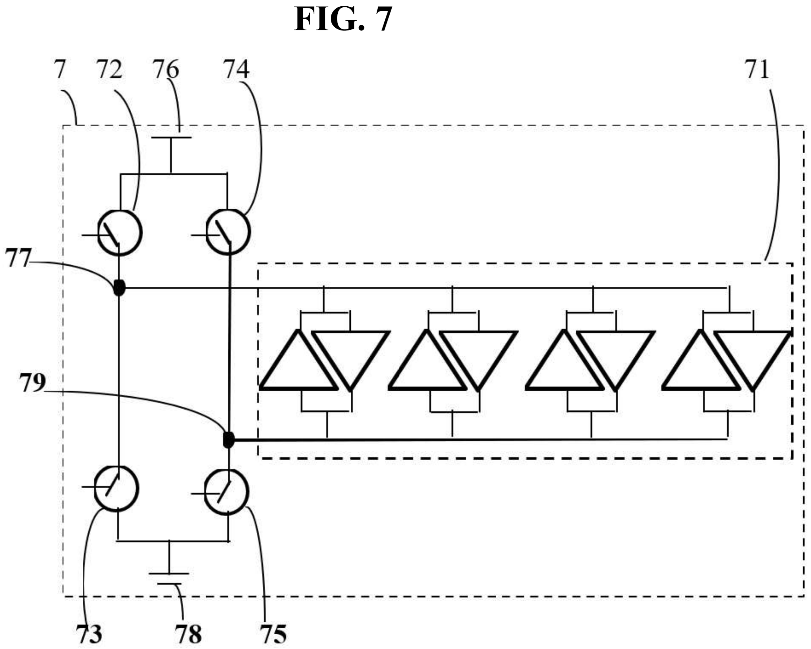

As shown in Figure 7, the present invention also provides a bidirectional emitting control apparatus triggered by power-line pulses (7), which comprises a bidirectional emitting light string triggered by power-line pulses (71), a first controllable switch (72), a second controllable switch (73), a third controllable switch (74), and a fourth controllable switch (75).

The first controllable switch (72), the second controllable switch (73), the third controllable switch (74), and the fourth controllable switch (75) are controlled by a control circuit, which is not shown in this embodiment.

The input port of the first controllable switch (72) is connected to a DC power supply (76), the output port of the first controllable switch (72) is connected to the first port (77) of the bidirectional emitting light string triggered by power-line pulses, and the control port of the first controllable switch (72) is connected to the control circuit.

The output port of the second controllable switch (73) is connected to the first port (77) of the bidirectional emitting light string triggered by power-line pulses, the input port of the second controllable switch (73) is connected to ground (78), and the control port of the second controllable switch (73) is connected to the control circuit.

The input port of the third controllable switch (74) is connected to the DC power supply (76), the output port of the third controllable switch (74) is connected to the second port (79) of the bidirectional emitting light string triggered by power-line pulses, and the control port of the third controllable switch (74) is connected to the control circuit.

The output port of the fourth controllable switch (75) is connected to the second port (79) of the bidirectional emitting light string triggered by power-line pulses, the input port of the fourth controllable switch (75) is connected to ground (78), and the control port of the fourth controllable switch (75) is connected to the control circuit.

In this embodiment, when the second controllable switch (73) and the third controllable switch (74) are tumed off and the first controllable switch (72) is turned on, the control circuit controls the fourth controllable switch (75) to tum on and off to control the first light-emitting module triggered by power-line pulse signals of the bidirectional emitting light string triggered by power-line pulses (71). When the first controllable switch (72) and the fourth controllable switch (75) are turned off and the second controllable switch (73) and the third controllable switch (74) are turned on, the reverse light emitting module of the bidirectional emitting light string triggered by power-line pulses (71) is activated.

In this embodiment, the bidirectional emitting light string triggered by power-line pulses (71) can be the bidirectional emitting light string triggered by power-line pulses (5), the bidirectional emitting light string triggered by power-line pulses (6) or the bidirectional emitting light string triggered by power-line pulses (7) as described above.

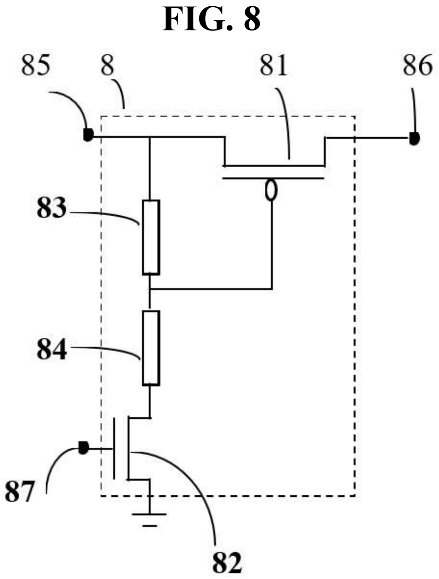

In this embodiment, the first controllable switch (72) and the third controllable switch (74) are a controllable switch module (8) as shown in Figure 8, and the second controllable switch (73) and the fourth controllable switch (75) are NMOS devices. The drain of NMOS device serves as the output port of the second controllable switch (73)/fourth controllable switch (75), the source of NMOS device serves as the input port of the second controllable switch (73)/fourth controllable switch (75), and the gate of NMOS device serves as the control port of the second controllable switch (73)/fourth controllable switch (75).

As shown in Figure 8, the controllable switch module (8) comprises a PMOS P1 (81), an NMOS N1 (82), a resistor R1 (83), and a resistor R2 (84). The source of the PMOS P1 (81) serves as the input port (85) of a controllable switch module, and the drain of the PMOS P1 (81) serves as an output port (86) of the controllable switch module. The source of the PMOS P1 (81) is connected to one port of the resistor R1 (83), and the other port of the resistor R1 (83) is connected to the gate of the PMOS P1 (81) and one port of the resistor R2 (84). The other port of the resistor R2 (84) is connected to the drain of the NMOS N1 (82). The gate of the NMOS N1 (82) serves as the control port (87) of a controllable switch module, and the source of the NMOS N1 (82) is connected to ground. In this embodiment, the resistor R1 (83) is 1k ohm, and the resistor R2 (84) is 1k ohm.

The LED color light groups of different color systems are drove by the first bidirectionally illuminating light source triggered by power-line pulse signals and the second bidirectionally illuminating light source triggered by power-line pulse signals, thereby obtaining a wide spectrum of light effects. Compared with the prior art, a spectral range is obtained by forward current while the light source is triggered to performs operations by the pulse signals input from the power lines. Another spectral range is obtained by reverse current, greatly increasing the spectral range of the light source with only two power wires.
The following is a list of further embodiments of the invention.
Embodiment 1. A bidirectionally illuminating light source triggered by power-line pulse signals, the light source comprising:
   a first light emitting module triggered by power-line pulse signals and a reverse light emitting module, which are connected in parallel between a first port and a second port of the power lines;
   said first light emitting module triggered by power-line pulse signals comprises an LED color light group and an LED driver that drives said LED color light group according to said power-line pulse signals loaded on said power lines;
   when the voltage level of said first port of said power lines is higher than that of said second port, said LED driver drives said LED color light group according to said power-line pulse signals loaded on said power lines; when the voltage level of said first port of said power lines is lower than that of said second port, said reverse light emitting module operates.
Embodiment 2. The light source of embodiment 1, wherein,
   said LED driver comprises a reverse current blocking module and an operation module triggered by power-line pulse signals;
   the input of said reverse current blocking module is connected to said first port of said power lines, and the output of said reverse current blocking module is connected to said operation module triggered by power-line pulse signals; said operation module triggered by power-line pulse signals drives said LED color light group according to the operation result.
Embodiment 3. The light source of embodiment 2, wherein,
   said reverse current blocking module is a unidirectional conducting module; said reverse current blocking module is conducting when the input voltage of said reverse current blocking module is higher than the output voltage of said reverse current blocking module, and said reverse current blocking module is turn off when the input voltage is lower than the output voltage of said reverse current blocking module.
Embodiment 4. The light source of embodiment 3, wherein,
   said unidirectional conducting module is a diode, with the anode of said diode connected to said first port of said power lines and the cathode connected to said operation module triggered by power-line pulse signals;
   alternatively, the unidirectional conducting module can be an equivalent diode formed by an NPN transistor, with the collector and base of the NPN transistor connected to said first port of said power lines, and the emitter connected to said operation module triggered by power-line pulse signals;
   alternatively, the unidirectional conducting module can be an equivalent diode formed by a PNP transistor, with the collector and base of the PNP transistor connected to said operation module triggered by power-line pulse signals, and the emitter connected to said first port of said power lines.
Embodiment 5. The light source of embodiment 4, wherein said reverse current blocking module and said operation module triggered by power-line pulse signals are integrated in a same integrated circuit.
Embodiment 6. The light source of embodiment 5, wherein the low level of said power-line pulse signals is equal to the voltage level of said second port of said power lines.
Embodiment 7. The light source of embodiment 5, wherein the low level of said power-line pulse signals is a third voltage level that is higher than the voltage level of said second port and lower than the voltage level of the said first port.
Embodiment 8. The light source of embodiment 5, wherein said operation module triggered by power-line pulse signals performs computation triggered by said pulse signals, and drives said color light group according to the computation results.
Embodiment 9. The light source of embodiment 8, wherein said operation module triggered by power-line pulse signals involve arithmetic operations, logical operations, or a combination of both.
Embodiment 10. The light source of embodiment 8, wherein said operation module triggered by power-line pulse signals performs pulse counting computation triggered by said pulse signals.
Embodiment 11. The light source of embodiment 5, wherein said operation module triggered by power-line pulse signals performs encoding and decoding computation triggered by said pulse signals, with the pulse width of high or low levels corresponding to encoded information.
Embodiment 12. The light source of embodiment 11, wherein different lengths of high levels, or different lengths of low levels, or combinations of different lengths of high and low levels, represent different logical encoding information.
Embodiment 13. The light source of embodiment 5, wherein said operation module triggered by power-line pulse signals performs modulation and demodulation computation based on the current or voltage frequency triggered by said pulse signals, and drives said LED color light group according to the modulation and demodulation computation result.
Embodiment 14. The light source of embodiment 1, wherein said reverse light-emitting module is composed of a plurality of LEDs.
Embodiment 15. The light source of embodiment 1, wherein,
   said reverse light-emitting module is a second light-emitting module triggered by power-line pulse signals; when the voltage level of said first port of the power lines is lower than that of said second port of the power lines, said second light-emitting module triggered by power-line pulse signals is driven by said power-line pulse signals loaded on said power lines, and drives an LED color light group of the second light-emitting module triggered by power-line pulse signals.
Embodiment 16. The light source of embodiment 15, wherein said LED color light group of said second light-emitting module triggered by power-line pulse signals is in a different color series from that of said LED color light group of said first light-emitting module triggered by power-line pulse signals.
Embodiment 17. A bidirectional emitting light string triggered by power-line pulses, comprising a plurality of light sources as claimed in any one from embodiments 1 to 16, wherein said light sources are connected to a first port of said light string and a second port of said light string;
   said plurality of light sources are connected in parallel, in a series-parallel structure, or in a parallel-series structure.
Embodiment 18. A bidirectional emitting control apparatus triggered by power-line pulses, comprising:
   a bidirectional emitting light string triggered by power-line pulses of embodiment 17, a first controllable switch, a second controllable switch, a third controllable switch, and a fourth controllable switch;
   said first controllable switch, said second controllable switch, said third controllable switch, and said fourth controllable switch are controlled by a control circuit;
   the input port of said first controllable switch is connected to a DC power supply, the output port of said first controllable switch is connected to said first port of said bidirectional emitting light string triggered by power-line pulses, and the control port of said first controllable switch is connected to said control circuit;
   the output port of said second controllable switch is connected to said first port of the bidirectional emitting light string triggered by power-line pulses, the input port of said second controllable switch is connected to ground, and the control port of said second controllable switch is connected to said control circuit;
   the input port of said third controllable switch is connected to said DC power supply, the output port of said third controllable switch is connected to said second port of said bidirectional emitting light string triggered by power-line pulses, and the control port of the third controllable switch is connected to said control circuit;
   the output port of said fourth controllable switch is connected to said second port of said bidirectional emitting light string triggered by power-line pulses, the input port of said fourth controllable switch is connected to ground, and the control port of said fourth controllable switch is connected to said control circuit.
Embodiment 19. A bidirectional emitting control apparatus of embodiment 18, when said second controllable switch and third controllable switch are turned off, said control circuit controls said first controllable switch between on and off to control said first light emitting modules triggered by power-line pulse signals of said bidirectional emitting light string triggered by power-line pulses.
Embodiment 20. A bidirectional emitting control apparatus of embodiment 18, when said first controllable switch and the fourth controllable switch are turned off, and said second controllable switch and the third controllable switch are turned on, said reverse light emitting modules work in said bidirectional emitting light string triggered by power-line pulses.
Embodiment 21. A bidirectional emitting control apparatus of embodiment 20, wherein said second and third controllable switches are turned off and said first controllable switch is turned on, said control circuit controls said fourth controllable switch between on and off to control said first light emitting modules triggered by power-line pulse signals of said bidirectional emitting light string triggered by power-line pulses.
Embodiment 22. A bidirectional emitting control apparatus of embodiment 21, wherein,
   the fourth controllable switch comprises a first N-type controllable switch, a second N-type controllable switch, and a current-limiting resistor;
   said first N-type controllable switch comprises a control port, an input port, and an output port; said control port of said first N-type controllable switch is electrically connected to said control circuit; said input port of said first N-type controllable switch serves as said input port of said fourth controllable switch, and the output port of the said N-type controllable switch is connected to ground;
   said second N-type controllable switch comprises a control port, an input port, and an output port; said control port of said second N-type controllable switch is electrically connected to said control circuit, and said output port of said second N-type controllable switch is connected to ground;
   one port of said current-limiting resistor is connected to said input port of said first N-type controllable switch, and the other port of said current-limiting resistor is connected to said input port of said second N-type controllable switch.
Embodiment 23. A bidirectional emitting control apparatus of embodiment 18, wherein,
   said first and third controllable switches in said bidirectional emitting control apparatus are controllable switch modules, and said second and fourth controllable switches are NMOS devices;
   said controllable switch module comprises PMOS P1, NMOS N1, resistor R1, and resistor R2; the source of PMOS P1 serves as said input port of said controllable switch module, and the drain of PMOS P1 serves as said output port of said controllable switch module; the source of PMOS P1 is connected to one port of resistor R1, and the other port of resistor R1 is connected to the gate of PMOS P1 and one port of resistor R2; the other port of resistor R2 is connected to the drain of NMOS N1, and the gate of NMOS N1 serves as the control port of said controllable switch module; the source of NMOS N1 is connected to ground;
   the drain of NMOS device serves as said output port of said second/fourth controllable switches, the source of NMOS device serves as said input port of said second/fourth controllable switches, and the gate of NMOS device serves as said control port of said second/fourth controllable switches.

## Claims

1. A bidirectionally illuminating light source triggered by power-line pulse signals (1), the light source comprising:
a first light emitting module triggered by power-line pulse signals (11) and a reverse light emitting module (12), which are connected in parallel between a first port (13) and a second port (14) of the power lines;
said first light emitting module triggered by power-line pulse signals (11) comprises an LED color light group (111) and an LED driver (112) that drives said LED color light group (111) according to said power-line pulse signals loaded on said power lines;
when the voltage level of said first port (13) of said power lines is higher than that of said second port (14), said LED driver (112) drives said LED color light group (111) according to said power-line pulse signals loaded on said power lines; when the voltage level of said first port (13) of said power lines is lower than that of said second port (14), said reverse light emitting module (12) operates;
wherein, said LED driver (112) comprises a reverse current blocking module (1121);
wherein, said reverse current blocking module is a unidirectional conducting module; said reverse current blocking module is conducting when the input voltage of said reverse current blocking module is higher than the output voltage of said reverse current blocking module, and said reverse current blocking module is turned off when the input voltage is lower than the output voltage of said reverse current blocking module.

2. The light source of claim 1,
wherein, said LED driver (112) further comprises an operation module triggered by power-line pulse signals.

3. The light source of claim 2,
wherein, the input of said reverse current blocking module (1121) is connected to said first port (13) of said power lines, and the output of said reverse current blocking module (1121) is connected to said operation module triggered by power-line pulse signals (1122); said operation module triggered by power-line pulse signals (1122) drives said LED color light group (111) according to its operation result.

4. The light source of claim 2 or 3, wherein said reverse current blocking module (1121) and said operation module triggered by power-line pulse signals (1122) are integrated in a same integrated circuit.

5. The light source of claim 4, at least one of
wherein the low level of said power-line pulse signals is equal to the voltage level of said second port of said power lines;
wherein the low level of said power-line pulse signals is a third voltage level that is higher than the voltage level of said second port and lower than the voltage level of the said first port; and
wherein said operation module triggered by power-line pulse signals performs computation triggered by said pulse signals, and drives said color light group according to the computation results.

6. The light source of claim 5, wherein said operation module triggered by power-line pulse signals involve arithmetic operations, logical operations, or a combination of both;
or
wherein said operation module triggered by power-line pulse signals performs pulse counting computation triggered by said pulse signals.

7. The light source of claim 4, wherein said operation module triggered by power-line pulse signals performs encoding and decoding computation triggered by said pulse signals, with the pulse width of high or low levels corresponding to encoded information;
and
wherein different lengths of high levels, or different lengths of low levels, or combinations of different lengths of high and low levels, represent different logical encoding information.

8. The light source of claim 4, wherein said operation module triggered by power-line pulse signals performs modulation and demodulation computation based on the current or voltage frequency triggered by said pulse signals, and drives said LED color light group according to the modulation and demodulation computation result.

9. The light source of claim 1, wherein,
said reverse light emitting module (12, 32) is a second light emitting module triggered by power-line pulse signals; when the voltage level of said first port (33) of the power lines is lower than that of said second port (34) of the power lines, said second light emitting module triggered by power-line pulse signals is driven by said power-line pulse signals loaded on said power lines, and drives an LED color light group of the second light emitting module triggered by power-line pulse signals.

10. A bidirectional emitting light string triggered by power-line pulses (4, 5, 6), comprising a plurality of light sources as claimed in any one from claims 1 to 9, wherein said light sources are connected to a first port of said light string and a second port of said light string;
said plurality of light sources (41, 42, 43, 44; 51, 52, 53, 54; 61, 62, 63, 64) are connected in parallel, in a series-parallel structure, or in a parallel-series structure.

11. A bidirectional emitting control apparatus triggered by power-line pulses (7), comprising:
a bidirectional emitting light string triggered by power-line pulses (71) of claim 10, a first controllable switch (72), a second controllable switch (73), a third controllable switch (74), and a fourth controllable switch (75);
said first controllable switch (72), said second controllable switch (73), said third controllable switch (74), and said fourth controllable switch (75) are controlled by a control circuit;
the input port of said first controllable switch (72) is connected to a DC power supply (76), the output port of said first controllable switch (72) is connected to said first port (77) of said bidirectional emitting light string triggered by power-line pulses, and the control port of said first controllable switch (72) is connected to said control circuit;
the output port of said second controllable switch (73) is connected to said first port (77) of the bidirectional emitting light string triggered by power-line pulses, the input port of said second controllable switch (73) is connected to ground (78), and the control port of said second controllable switch (73) is connected to said control circuit;
the input port of said third controllable switch (74) is connected to said DC power supply (76), the output port of said third controllable switch (74) is connected to said second port (79) of said bidirectional emitting light string triggered by power-line pulses, and the control port of the third controllable switch (74) is connected to said control circuit;
the output port of said fourth controllable switch (75) is connected to said second port (79) of said bidirectional emitting light string triggered by power-line pulses, the input port of said fourth controllable switch (75) is connected to ground (78), and the control port of said fourth controllable switch (75) is connected to said control circuit.

12. A bidirectional emitting control apparatus of claim 11, when said second controllable switch (73) and third controllable switch (74) are turned off, said control circuit controls said first controllable switch (72) between on and off to control said first light emitting modules triggered by power-line pulse signals of said bidirectional emitting light string triggered by power-line pulses.

13. A bidirectional emitting control apparatus of claim 11, wherein said second (73) and third controllable switches (74) are turned off and said first controllable switch (72) is turned on, said control circuit controls said fourth controllable switch (75) between on and off to control said first light emitting modules triggered by power-line pulse signals of said bidirectional emitting light string triggered by power-line pulses.

14. A bidirectional emitting control apparatus of claim 13, wherein,
the fourth controllable switch comprises a first N-type controllable switch, a second N-type controllable switch, and a current-limiting resistor;
said first N-type controllable switch comprises a control port, an input port, and an output port; said control port of said first N-type controllable switch is electrically connected to said control circuit; said input port of said first N-type controllable switch serves as said input port of said fourth controllable switch, and the output port of the said N-type controllable switch is connected to ground;
said second N-type controllable switch comprises a control port, an input port, and an output port; said control port of said second N-type controllable switch is electrically connected to said control circuit, and said output port of said second N-type controllable switch is connected to ground;
one port of said current-limiting resistor is connected to said input port of said first N-type controllable switch, and the other port of said current-limiting resistor is connected to said input port of said second N-type controllable switch.

15. A bidirectional emitting control apparatus of claim 11, wherein,
said first (72) and third controllable switches (74) in said bidirectional emitting control apparatus are controllable switch modules (8), and said second (73) and fourth controllable switches (75) are NMOS devices;
said controllable switch module (8) comprises PMOS P1 (81), NMOS N1 (82), resistor R1 (83), and resistor R2 (84); the source of PMOS P1 (81) serves as said input port (85) of said controllable switch module, and the drain of PMOS P1 (81) serves as said output port (86) of said controllable switch module; the source of PMOS P1 (81) is connected to one port of resistor R1 (83), and the other port of resistor R1 (83) is connected to the gate of PMOS P1 (81) and one port of resistor R2 (84); the other port of resistor R2 (84) is connected to the drain of NMOS N1 (82), and the gate of NMOS N1 (82) serves as the control port (87) of said controllable switch module; the source of NMOS N1 (82) is connected to ground;
the drain of NMOS device serves as said output port of said second/fourth controllable switches, the source of NMOS device serves as said input port of said second/fourth controllable switches, and the gate of NMOS device serves as said control port of said second/fourth controllable switches.
